# EUROPEAN PATENT APPLICATION

(11) **EP 1 691 035 A2**
(43) Date of publication of application: **16.08.2006**
(21) Application number: 06250302.4
(22) Date of filing: 20.01.2006
(51) Int. Cl.: F01D 21/00, F16K 17/00

(54) **Evacuation of hot gases accumulated in an inactive gas turbine engine**

(30) Priority: 21.01.2005 US 38103
(71) Applicant: PRATT & WHITNEY CANADA CORP., Longueuil, Quebec J4G 1A1 (CA)
(72) Inventor: Prociw, Lev Alexander, Elmira, Ontario N3B 1V1 (CA); Shafique, Harris, Longueuil, Quebec J4G 2P5 (CA)
(74) Representative: Leckey, David Herbert

(57) **Abstract**

A gas turbine engine (10) including a compressor (14), a combustor (16), and a turbine (18) in serial flow within a casing (121), said gas turbine engine comprising:
an internal passage (137) defined within a portion of said casing (121), said internal passage (137) receiving hot gases which accumulate therein when said gas turbine engine becomes inactive following a shutdown thereof; and
a gas relief valve (136) disposed in an upper portion of said casing (121) proximate said internal passage (137) and operable to open when said engine is inactive such that hot gases from said internal passage (137) are evacuated therethrough, said valve (136) being closed when said gas turbine engine is in operation.

## Description

### TECHNICAL FIELD

The invention relates generally to gas turbine engines and, more particularly, to the evacuation of hot gases accumulated in the upper portion of the engine after shutdown.

### BACKGROUND OF THE ART

A common problem in gas turbine engines is the accumulation of hot gases in the upper portions of the combustor and engine casing after engine shutdown. The phenomenon is commonly referred to as soak back. This problem is particularly present in engines where the compressor stages are of greater diameter than the turbine stages, which is the case in many gas turbine engines that have a centrifugal compressor. Cooling of the hot gas path by natural convection leads to hot gas being trapped in the upper portion of the engine. The trapped gas has been determined to lead to severe damage to the engine such as seal deterioration, coking and thermal stresses induced to the engine casing, when sufficiently high temperatures are present. Components having longer life spans are continually sought by designers to overcome this problem.

Another problem arising from this accumulation of hot gas in the upper portion of the engine is thermal imbalance. In fact, thermal dilatation of the components present in the regions where the hot gases accumulate leads to a slight change of the center of gravity of certain engine components, especially that of the rotating turbine components. Common security measures to counter this problem include waiting a predetermined period of time before starting the motor after shutdown, such that the engine has sufficiently cooled down, and rotating the engine with the starter motor for a predetermined period of time to keep hot gas accumulation from forming. A solution to this problem which has been suggested by the prior art is to inject cool air to the regions where the components are most susceptible to thermal expansion.

### SUMMARY OF THE INVENTION

It is therefore an object of this invention to provide means for evacuating hot gases accumulating in the upper portion of a gas turbine engine after shutdown.

In one aspect, the present invention provides a gas turbine engine including a compressor, a combustor, and a turbine in serial flow within a casing, said gas turbine engine comprising: an internal passage defined within a portion of said casing, said internal passage receiving hot gases which accumulate therein when said gas turbine engine becomes inactive following a shutdown thereof; and a gas relief valve disposed in an upper portion of said casing proximate said internal passage and operable to open when said engine is inactive such that hot gases from said internal passage are evacuated therethrough, said valve being closed when said gas turbine engine is in operation.

In another aspect, the present invention provides a gas turbine engine comprising means disposed in a region of hot air accumulation within a casing of a the gas turbine engine and being in gas flow communication with an internal passage defined within said casing adjacent said region, said internal passage collecting hot gases which accumulate when said engine becomes inactive after shutdown thereof, said means for opening following said shutdown to evacuate said hot gases from said internal passage by at least natural convection, said means being closed when said engine is in operation.

In another aspect, the present invention provides a method for evacuating hot gases collected within a gas turbine engine after shutdown, the method comprising: detecting an engine shutdown; and opening at least one valve in the gas turbine engine to permit said hot gases to evacuate therefrom.

Further details of these and other aspects of the present invention will be apparent from the detailed description and figures included below.

### DESCRIPTION OF THE DRAWINGS

Reference is now made to the accompanying figures depicting aspects of the present invention, in which:
Fig. 1 is a schematic cross sectional view of a gas turbine engine;
Fig. 2 is a partial schematic cross-sectional view showing a region of hot gas accumulation and the position of a gas relief valve; and
Fig. 3 is a cross-sectional view of the hot gas release valve of Fig. 2.

### DETAILED DESCRIPTION OF THE PREFERRED EMBODIMENTS

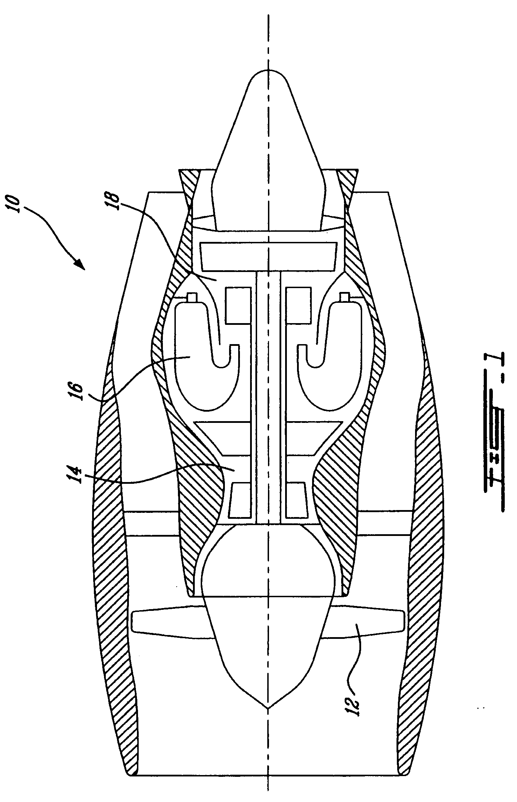

Fig.1 illustrates a gas turbine engine 10 of a type preferably provided for use in subsonic flight, generally comprising in serial flow communication a fan 12 through which ambient air is propelled, a multistage compressor 14 for pressurizing the air, a combustor 16 in which the compressed air is mixed with fuel and ignited for generating an annular stream of hot combustion gases, and a turbine section 18 for extracting energy from the combustion gases.

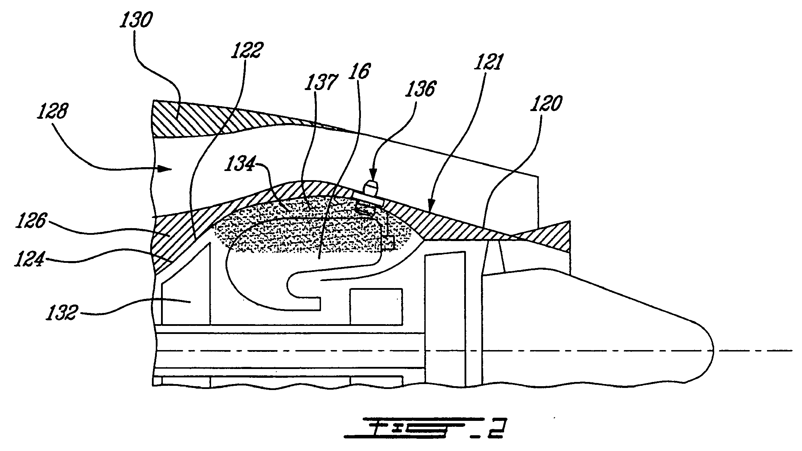

Referring now to Fig. 2, the gas turbine engine comprises a gas generator section thereof, which includes at least a gas generator casing 121 having an external wall 120 outside which the bypass air is propelled by fan 12, and an internal wall 122 defining therewithin an internal passage 124 within which the internal gas flow is directed as it flows through the core engine components 14, 16, and 18. The area between the internal and external walls 122 and 120 of the casing 121 may include an opening therebetween defined herein as an "enclosure" 126, that may comprise one or more compartments. Alternately, a single-walled engine casing 121 may be provided, in which case no such enclosure would exist. The fan 12 propels bypass air through an external passage 128 defined between the casing 121 and an outer engine cowl 130.

During engine operation, the pressure and temperature of the gas flowing through the combustor, and downstream thereof, are high. After shutdown, the engine becomes inactive and the air flow through the engine is limited only to natural convection. While hot gas left in the later turbine stages, closer to the exhaust end of the engine, tends to be drawn out of the engine via the exhaust, pockets of hot gases accumulate in the regions of the engine which do not allow for such a free flow exit of hot gases from the engine. Additionally, residual heat of the hot components, especially those near the combustor and first downstream high pressure turbine stage, tend to take a considerable amount of time to gradually cool down, thus further adding heat to these pockets of hot gases trapped within the engine casing. These pockets of hot gases accumulate after shutdown, and tend to rise within the engine and collect within the upper portion of internal passages 124 by natural convection. This has a greater tendency of occurring in regions of greater diameter than neighbouring regions, such as within the gas generator casing adjacent the combustor for example. This is especially true in engines where the compressor stage is of a larger diameter than the turbine stage, which is the case in many engines that comprise a centrifugal compressor 132. In the illustration, the hot gas accumulation 134 is depicted as a shaded area in the internal passage 124 defined within casing 121. Although the preferred embodiment of the present invention is described specifically with regards to venting such hot gases from the gas generator case surrounding the combustor, the present invention is also applicable to other upper regions of the gas turbine engine in which hot gases tend to rise up and become trapped.

As depicted in Fig. 2, the combustion stage has a combustor 16 with an outer combustor wall which defines an annular internal passage 137 between itself and the surrounding section of the gas generator internal casing 122. It is within this internal passage 137 of the gas generator portion of the gas turbine engine 10 that hot gases most tend to accumulate when the engine is inactive, following shutdown thereof. Hot gases remaining in the combustor 16 itself when the engine is inactive, ie: after engine shutdown, generally percolate upwards through various apertures in the combustor walls and into the internal passage or cavity 137 disposed radially outward therefrom at the upper portion of the engine. It has been determined that hot gases particularly tend to accumulate following an emergency engine shutdown. The hot gases which cannot escape from the front of the engine through the air inlet or through the rear of the engine through the exhaust, all tend to accumulate in this region of the internal passage 137 defined within the casing 121 of the gas generator section of the engine. This is largely simply due to its enclosed nature and the fact that this internal passage defines a high point, within which warmer gas rises to due to natural convection. Accordingly, hot gas relief valve 136 is disposed through the casing 121, in general proximity to this internal passage 137. Thus, the inner passage or cavity 137 defined within the gas generator case 121 provides gas flow communication with the bypass air duct 128 of the engine. In other engine configurations, the valve 136 provides fluid flow communication between the internal passage 137 and the atmosphere surrounding the engine. The hot gas relief valve 136 is preferably disposed at a highest point in the casing, or at least near this highest point, such that hot gas accumulated within the internal passage is free to vent out to atmosphere naturally, once the valve is opened. The valve 136 is therefore preferably disposed along the centerline of the engine, through the top of the gas generator casing 121. The valve 136 is thus operable to open, at a point following engine shutdown when the engine is inactive, such that the accumulated hot gases evacuate from within the engine. In an alternative embodiment in which several casing must be traversed for the hot gases trapped within the engine to escape, two or more such hot gas relief valves 136 are provided, one in each of the casings.

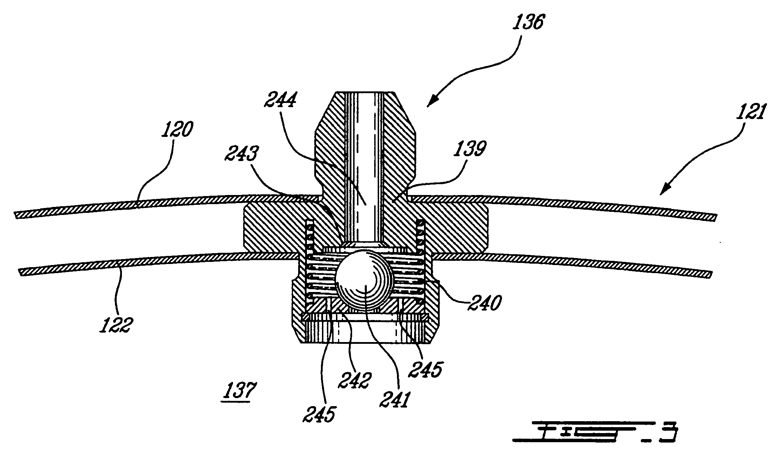

Preferably, the valve 136 is passive, and is configured to open when the pressure within the internal passage 137 sufficiently subsidies. This occurs only when the engine is inactive, namely following an engine shutdown. As depicted in Fig. 3, such a valve 136 is a one-way check type valve, which comprises a biasing member in the form of a spring 240 acting upon a displacing valve closing member 241, in the form of a ball seal. The biasing member may alternately comprise another type of resilient means, such as a component responsive to the action of gravity. Spring 240 keeps the valve open by default, by forcing the pressure plate 242 away from the valve body 139, such that the ball 241 is allowed to fall free of the annular valve seat 243 of the valve body. When the engine is inactive and the internal pressure within the internal passage 137 is low, the spring 240 provides greater force on the pressure plate 242 than does outward force exerted thereagainst by the internal pressure. Hot gas from within the internal passage 137 is then free to flow through apertures 245 defined through the pressure plate 242 and then to vent out to atmosphere via valve body passage 244, when the valve is in the open position as depicted in Fig. 3. When the engine is in operation however, outward force against the pressure plate 242, exerted by the high internal pressure within the internal passage 137, acts against the spring force of the spring 240 to force the ball 241 against the valve seat 243 thereby closing the valve. As long as the engine is in operation, the high pressure within the engine will force the valve 136 to remain closed, preventing any unwanted opening of the valve during engine operation. Alternately, the pressure plate can be replaced by another pressure sensitive means such as a pressure sensitive diaphragm for example. After engine shutdown, the action of the spring ensures that the valve opens, when the internal pressure within the engine drops sufficiently. Alternately still, the valve may be configured to remain closed by default, and only permit opening once the internal pressure within the engine has dropped to a level substantially low enough to guarantee that the engine is inactive.

In another embodiment, the valve is an active valve and is operable to be opened or closed by an actuation means, such as a solenoid. The solenoid may be used to remotely open and close the valve, to open the valve only, in which case resilient means is provided to keep valve closed by default, or only to close the valve, in which case resilient means is provided to keep valve open by default. Many other alternative uses may be made of an active valve. The electrically powered solenoid used to open and close the valve is preferably in communication with a engine electronic control (EEC) system, such that the solenoid is activated by the EEC to open the valve once it has been detected that the engine is no longer in operation. Prior to start-up of the engine, the EEC closes valve using the solenoid. Such an EEC may also be used to maintain the valve 136 open for only a specific predetermined period of time, the period of time being selected to permit all the trapped hot gas to escape from within the engine casing, before being closed.

Whether a passive valve or an active one, the valve may also include a timer, activated when said valve is opened, to keep said valve open for a predetermined amount of time before it is closed. For passive valves, such a timer includes an independently operable timer mechanism, and for active valves such a timer may be incorporated into the software for the EEC.

In one alternative, the actuation means is used in combination with one or more sensor(s) to detect a value of pressure or temperature inside the internal passage, and the actuation means is operated in response to the detected value(s) of pressure or temperature. This leads to two secondary alternatives: 1. an indicator of the detected value and an actuation switch provided to a user for manual operation of the valve depending on the value(s) indicated; and 2. a comparator, provided inside an electronic component or the EEC for example, which compares the detected value(s) to hard-coded or pre-programmed threshold values and operates the actuation means accordingly to open and close the valve. Pressure is advantageously used as a detected value to provide an indication of whether the engine is in operation or inactive. Temperature is advantageously used as a detected value to provide an indication of whether hot gases are accumulated or not, as well as to provide an indication of whether the engine is in operation or inactive.

In one alternative, the actuation means is directly connected to the engine power switch. In this case, the solenoid is powered and closes the valve when it receives engine power, and a spring opens the valve by default when the engine is shut down and engine power is cut off from the solenoid.

Many other alternatives will appear to those skilled in the art and will prove to adapt to different applications, like an electronic equipment to control actuation of a number of valves at different locations on the engine.

Although in the instant description, discussion was made of an aircraft engine, and preferably one with a centrifugal compressor, the invention is applicable to many types of gas turbine engines in which hot gases can accumulate when the engine is inactive after shutdown.

The above description is meant to be exemplary only, and one skilled in the art will recognize that changes may be made to the embodiments described without departing from the scope of the invention disclosed. For example, the valve is preferably located at the top of the engine casing, but may also be located elsewhere in the casing adjacent an internal pocket of hot air trapped within the engine, and may be disposed closer to the intake or the exhaust depending on the particular application. Although one valve is described, any number and/or type of valves may be provided. As well, the mechanism or means need not be a "valve" per se, but rather any mechanism or means which accomplishes the functionality described. Natural convection may be aided or replaced by other heat transfer mans as well. Many alternatives to the valve described may be used to accomplish the goal of evacuating accumulated hot gases. Still other modifications which fall within the scope of the present invention will be apparent to those skilled in the art, in light of a review of this disclosure, and such modifications are intended to fall within the appended claims.

## Claims

1. A gas turbine engine (10) including a compressor (14), a combustor (16), and a turbine (18) in serial flow within a casing (121), said gas turbine engine comprising:
an internal passage (137) defined within a portion of said casing (121), said internal passage (137) receiving hot gases which accumulate therein when said gas turbine engine becomes inactive following a shutdown thereof; and
a gas relief valve (136) disposed in an upper portion of said casing (121) proximate said internal passage (137) and operable to open when said engine is inactive such that hot gases from said internal passage (137) are evacuated therethrough, said valve (136) being closed when said gas turbine engine is in operation.

2. The gas turbine engine of claim 1 wherein said casing (121) comprises an external casing (120) outside which said hot gases are evacuated and an internal casing (122) defining said internal passage (137) therewithin.

3. The gas turbine engine of claim 1 wherein said casing (122) is an internal casing, said valve (136) being operable to open to evacuate said hot gases from said internal passage (137) to an enclosure (126) defined between said internal casing (122) and an external casing (120).

4. The gas turbine engine of claim 3 further comprising a secondary gas relief valve installed in said external casing (120) and operable to open to evacuate said hot gases from said enclosure (126) to the atmosphere.

5. The gas turbine engine of any preceding claim wherein said valve (136) includes a timer activated when said valve (136) is opened to keep said valve (136) open for a predetermined amount of time before it is closed.

6. The gas turbine engine of any preceding claim wherein said hot gases are evacuated from said internal passage (137) by natural convection.

7. The gas turbine engine of any preceding claim further comprising a sensor for detecting a value of at least one of a pressure and a temperature inside said internal passage (137), and wherein an actuation means is operable in response to said detected value to at least one of open and close said valve (136).

8. The gas turbine engine of claim 7 further comprising a comparator for comparing said detected value to a threshold value, wherein said actuation means operate said valve (136) in response to said comparison.

9. The gas turbine engine of claim 7 further comprising at least one indicator for indicating said detected value to a user, wherein said actuation means is operable by the user to actuate said actuation means in response to said indication.

10. The gas turbine engine of any preceding claim, wherein said valve (136) is actuable by an electronic engine control unit of the gas turbine engine.

11. The gas turbine engine of any preceding claim, wherein said valve (136) is actuated by a pressure differential between said internal passage (137) and atmosphere outside said casing.

12. A gas turbine engine comprising means (136) disposed in a region of hot air accumulation within a casing (121) of the gas turbine engine and being in gas flow communication with an internal passage (137) defined within said casing (121) adjacent said region, said internal passage (137) collecting hot gases which accumulate when said engine becomes inactive after shutdown thereof, said means (136) for opening following said shutdown to evacuate said hot gases from said internal passage (137) by at least natural convection, said means (136) being closed when said engine is in operation.

13. The gas turbine engine as defined in claim 12, wherein said means (136) opens in response to a pressure drop within said internal passage indicative of said shutdown.

14. The gas turbine engine as defined in claim 13, wherein said means (136) includes a pressure sensitive means (242) for keeping said means (136) closed in response to operating internal pressure within said internal passage (137), and a resilient means (240) for biasing said means (136) open when said engine is inactive.

15. The valve of claim 14 wherein said resilient means is a component of said means responsive to the action of gravity.

16. The valve of claim 14 or 15 wherein said pressure sensitive means (242) is one of a pressure plate and a pressure diaphragm displaceable by said high internal pressure.

17. A method for evacuating hot gases collected within a gas turbine engine after shutdown, the method comprising:
detecting an engine shutdown; and
opening at least one valve (136) in the gas turbine engine to permit said hot gases to evacuate therefrom.

18. The method as defined in claim 17 further comprising:
detecting a value of at least one of a temperature and a pressure in an internal passage (137) of said engine;
comparing said detected value to a threshold value; and
activating said valve (136) to open based upon a result of said comparison.

19. The method of claim 18 further comprising indicating said detected value to a user, and wherein said comparing and activating are done via said user.

20. The method as defined in any of claims 17 to 19, wherein said hot gases are released by natural convection.
